# EUROPEAN PATENT APPLICATION

(11) **EP 2 747 265 A1**
(43) Date of publication of application: **25.06.2014**
(21) Application number: 11875127.0
(22) Date of filing: 19.12.2011
(51) Int. Cl.: H02M 7/48

(54) **HIGHLY EFFICIENT INVERTER**

(30) Priority: 03.11.2011 CN 201110348576
(71) Applicant: Taizhou Fuling Electric Co. Ltd., Zhejiang 317519 (CN)
(72) Inventor: YOU, Yongliang, Taizhou Zhejiang 317519 (CN); SHAO, Yuze, Taizhou Zhejiang 317519 (CN); ZHONG, Zhibing, Taizhou Zhejiang 317519 (CN)
(74) Representative: Elzaburu S.L.P.
(86) International application number: PCT/CN2011/084247
(87) International publication number: WO 2013/063844

(57) **Abstract**

This invention provides a high efficiency inverter, and belongs to the inverter technology field. It resolves the problems of complex circuit, big DC electromagnetic interference of the existing inverters. The high efficiency inverter includes a DC power supply Vdc, an AC power supply Vac, six switch tubes S1, S2, S3, S4, S5, S6, two diodes D1, D2, two filter inductors L1, L2, and a microcontroller MCU, respective control terminals of the switch tubes S1, S2, S3, S4 are connected with high-frequency pulse signal output terminals of the microcontroller through modulation circuits, the switch tubes S5 and S6 are respectively connected with working frequency pulse signal output terminals of the microcontroller MCU. The high efficiency inverter has the advantages of simple circuit, high efficiency and small DC electromagnetic interference.

## Description

### TECHNICAL FIELD

This invention belongs to the inverter technology field, and relates to a high efficiency inverter.

### DESCRIPTION OF BACKGROUND

Inverters are a kind of devices for converting electric energy, mainly power conversion from direct current (DC) to alternating current (AC). Grid-connected inverters include photovoltaic grid-connected inverters, wind grid-connected inverters, fuel cell grid-connected inverters and so on. The grid-connected inverters can efficiently convert the energy of the renewable energy source to an alternating current capable of being connected to the electric supply and having the same frequency, same phase as the electric supply.

It can be classified into half-bridge inverter power supply and full bridge inverter power supply according to the circuit form. Wherein the full bridge inverter power supply can be controlled in two ways: unipolar SPWM modulation and bipolar SPWM modulation. In bipolar SPWN modulation, two switch tubes of a same bridge arm are complementarily driven, because of the inconsistency of turn-on, turn-off characteristic of the switch tubes and the inconsistency of dead time control circuit parameters, the two switch tubes of the same bridge arm may lead to be conducted simultaneously, to thereby cause the switch tubes damaged. In unipolar SPWN modulation, only one switch tube is used for high frequency switch in the negative half cycle of the electric supply, resulting in that utilization rate of output inductance drops, thereby lowering the efficiency of the inverter power supply; this control method could lead to an outstanding electromagnetic interference problem at the DC side.

### SUMMARY

An object of the present invention is to provide a high efficiency inverter which has simple circuit, high efficiency and small DC electromagnetic interference, in view of the above existing technical problems.

The object of the present invention can be achieved through the following technical solutions: a high efficiency inverter, comprises a DC power supply Vdc and an AC power supply Vac, the high efficiency inverter further comprises: six switch tubes S1, S2, S3, S4, S5, S6, two diodes D1, D2, two filter inductors L1, L2, and a microcontroller MCU, positive terminal and negative terminal of the DC power supply Vdc are connected with a filter capacitor C1, current input terminal of the switch tube S1 and current input terminal of the switch tube S2 are connected with the positive terminal of the current DC power supply Vdc, an current output terminal of the switch tube S1 is simultaneously connected with an input terminal of the switch tubes S3, an input terminal of the switch tube S5, an anode of the diode D1 and the filter inductor L1, a current output terminal of the switch tube S2 is simultaneously connected with an output terminal of the switch tube S5, a cathode of the diode D1, an input terminal of the switch S6 and a cathode of the diode D2, current output terminal of the switch tube S3 and current output terminal of the switch tube S4 are connected with a negative electrode of the DC power supply Vdc, an output terminal of the switch tube S6 and an input terminal of the switch tube S4, an anode of the diode D2 are connected with the filter inductor L2, another ends of the filter inductors L1 and L2 are connected by the alternating power supply Vac, respective control terminals of the switch tubes S1, S2, S3, S4 are connected with high-frequency pulse signal output terminals of the microcontroller through modulation circuits, the switch tubes S5 and S6 are respectively connected with working frequency pulse signal output terminals of the microcontroller MCU.

The filter capacitor C 1 is used for lowering input ripple during inverting. The DC power supply Vdc is the DC energy generating device, such as: solar panels, wind energy, fuel cells, etc.. The modulation circuits are used for modulating the high-frequency pulse signals output from the microcontroller MCU and the sinusoidal signal into the high-frequency trigger signals for driving the four switch tubes S1, S2, S3 and S4; the sinusoidal signals have the same frequency and the same phase as the AC power on the AC power supply Vac.

In the high efficiency inverter, the control terminals of the switch tubes S 1 and S4 are respectively connected with a first one of the high-frequency pulse signal output terminals of a microcontroller MCU through the corresponding modulation circuit, the control terminals of the switch tubes S2 and S3 are respectively connected with a second one of the high-frequency pulse signal output terminal of the microcontroller MCU through the corresponding modulation circuit, the switching tubes S5 and S6 are respectively connected with two of the working frequency pulse signal output terminals of the microcontroller MCU.

In working, for the positive half cycle output, the microcontroller MCU makes S5 open throughout the positive half cycle, meanwhile S2, S3, S6 cutoff, and makes S1, S4 in switch operation in the high-frequency synchronization, and makes L1, L2 to output the positive half cycle of the alternating current power supply at an outer side thereof; for the negative half cycle output, the microcontroller MCU makes S6 open throughout the negative half cycle, meanwhile S1, S4, S5 cutoff, and makes S2, S3 in switch operation in the high-frequency synchronization, and makes L1, L2 to output the negative half cycle of the alternating current power supply at the outer side thereof; such go round and round. In the high efficiency inverter, in the period that the filter inductors L1 and L2 output a positive half cycle of the AC power supply Vac at the outer sides thereof, the switch tube S5 is open throughout the positive half cycle; when the high-frequency trigger signal of the switch tubes S 1 and S4 is at high level, the switch tubes S1 and S4 are turned on, the positive terminal of the DC power supply Vdc, the switch tube S1, the filter inductor L1, the output AC power supply Vac, the filter inductor L2, the switch tube S4 and the negative terminal of the DC power supply Vdc in turn constitute a current loop; when the high-frequency trigger signal of the switches S 1 and S4 is at low level, the switch tube S5, the diode D2, the filter inductor L2, the output AC power supply Vac and the filter inductor L1 constitute a freewheeling loop.

In the high efficiency inverter, in the period that the filter inductors L1 and L2 output a positive half cycle of the AC power supply Vac at the outer sides thereof, the switch tube S5 is open throughout the positive half cycle; when the high-frequency trigger signal of the switch tubes S 1 and S4 is at high level, the switch tubes S 1 and S4 are turned on, the positive terminal of the DC power supply Vdc, the switch tube S1, the filter inductor L1, the output AC power supply Vac, the filter inductor L2, the switch tube S4 and the negative terminal of the DC power supply Vdc in turn constitute a current loop; when the high-frequency trigger signal of the switches S1 and S4 is at low level, the switch tube S5, the diode D2, the filter inductor L2, the output AC power supply Vac and the filter inductor L1 constitute a freewheeling loop.

Compared with the prior art, the present high efficiency inverter has the following advantages:

1. The high efficiency inverter of the present invention with respect to the conventional full-bridge circuits, increases a switch tube on the one bridge arm, and increases a switch tube between the bridge arms, so that in both of the positive half cycle and the negative half cycle, the two inductors work at the same time, to improve inductance utilization rate, and improve the DC electromagnetic interference problem, with respect to the conventional inverter circuit structures, the circuit can improve the utilization rate of the inductors, and reduce the freewheeling loop, to thereby improve the whole machine efficiency; at the same time can reduce the machine DC electromagnetic interference problems, so that the performances of various aspects of the inverter are enhanced.

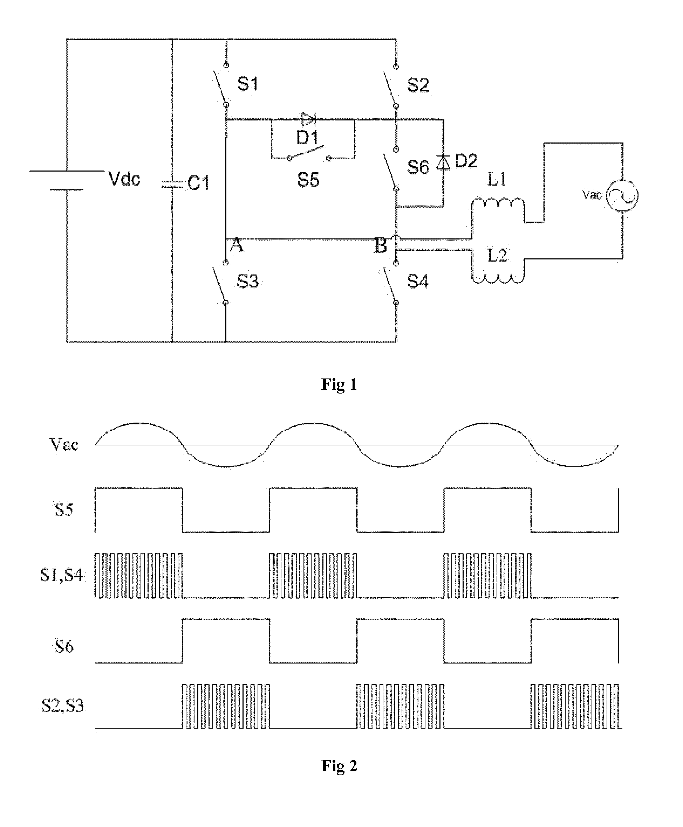

2. Since the freewheeling apparatus is proposed here, the energy storage device, i.e., the filter capacitor C1 does not participate in the freewheeling process, the potentials at the two points A, B in FIG. 1 remains substantially equal in the freewheeling process, and the potential variation at the tow points A, B is small in the inverting state as well as the freewheeling state, which reduces the DC electromagnetic interference problems.

3. Four switching tubes used in the inverting device in the present invention all are for the high-frequency switching, which makes that the potentials at inner side terminals of the two filtering inductors L1, L2 are presented as high-frequency pulse whether in the positive half cycle or negative half cycle, the outer terminals thereof are presented as the electric supply, which improves the utilization rate of the filter inductors.

4. The present invention introduces a freewheeling, which makes freewheeling loop shorter, thereby reducing the loss to enhance the efficiency, there are two switch tubes for high-frequency switching in the positive and negative half cycles of the electric supply, and related switch tubes and diodes for freewheeling, and a low-frequency switch tube is involved in energy conversion in the positive and negative half cycles of the electric supply.

5. Since the high-frequency conversion voltage of the main switch tube is half of Vdc, switching loss of the main switch tube is reduced, and thus enhancing the whole machine efficiency.

### DESCRIPTION OF THE DRAWINGS

FIG. 1 is a circuit schematic diagram of a high efficiency inverter;
FIG. 2 is a waveform graph of respective components of the high efficiency inverter;
FIG. 3 is a current loop diagram of the high efficiency inverter outputting positive half cycle alternating current;
FIG. 4 is a freewheeling loop diagram of the high efficiency inverter outputting positive half cycle alternating current;
FIG. 5 is a current loop diagram of the high efficiency inverter outputting negative half cycle alternating current;
FIG. 6 is a freewheeling loop diagram of the high efficiency inverter outputting negative half cycle alternating current.

### DETAILED DESCRIPTION OF THE EMBODIMENTS

The following is a further detailed description of the technical proposal of the present invention, according to the particular embodiment of the present invention and the accompanying drawings, however the present invention is not limited to these embodiments.

An inverter is for converting a direct current power (battery, storage battery etc.) into an alternating current (general for a 220V/50HZ sine wave or square wave), in the present invention into a sinusoidal alternating current. It is widely applied in air conditioners, home theaters, electric wheels, electric tools, sewing machines, DVDs, VCDs, computers, televisions, washing machines, smoke machine, refrigerator, video recorders, massagers, fans, lighting devices etc. As shown in FIG.1, in the high efficiency inverter, positive and negative terminals of a direct-current power supply Vdc is connected with a filter capacitor C1, current input terminals of a switch tube S1 and a switch tube S2 is connected to the positive terminal of the direct-current power supply Vdc, a current input terminal of the switch S 1 is simultaneously connected with an input terminal of a switch tube S3, an input terminal of a switch tube S5, an anode of a diode D1 and a filter inductor L1, a current output terminal of the switch S2 is simultaneously connected with an output terminal of the switch tube S5, a cathode of the diode D1, an input terminal of a switch tube S6 and a cathode of a diode D2, current output terlive terminal of the direct-current power supply Vdc, an output terminal of the switch tube S6 and an input terminal of the switch tube S4, an anode of the diode D2 are connected with the filter inductor L2, another ends of the filter inductors L1 and L2 are connected by an alternating power supply Vac. In the present invention the six switch tubes are transistors.

Control terminals of the switch tubes S1, S4 are respectively connected with a first high-frequency pulse signal output terminal of a microcontroller MCU through a modulation circuit, control terminals of the switch tubes S2, S3 are respectively connected with a second high-frequency pulse signal output terminal of the microcontroller MCU through a modulation circuit, the switching tubes S5, S6 are respectively connected with two working frequency pulse signal output terminals of the microcontroller MCU.

As shown in FIG. 2, in working, for the positive half cycle output, the microcontroller MCU makes S5 open throughout the positive half cycle, meanwhile S2, S3, S6 cutoff, and makes S1, S4 in switch operation in the high-frequency synchronization, and makes L1, L2 to output the positive half cycle of the alternating current power supply at an outer side thereof; for the negative half cycle output, the microcontroller MCU makes S6 open throughout the negative half cycle, meanwhile S1, S4, S5 cutoff, and makes S2, S3 in switch operation in the high-frequency synchronization, and makes L1, L2 to output the negative half cycle of the alternating current power supply at the outer side thereof; such go round and round.

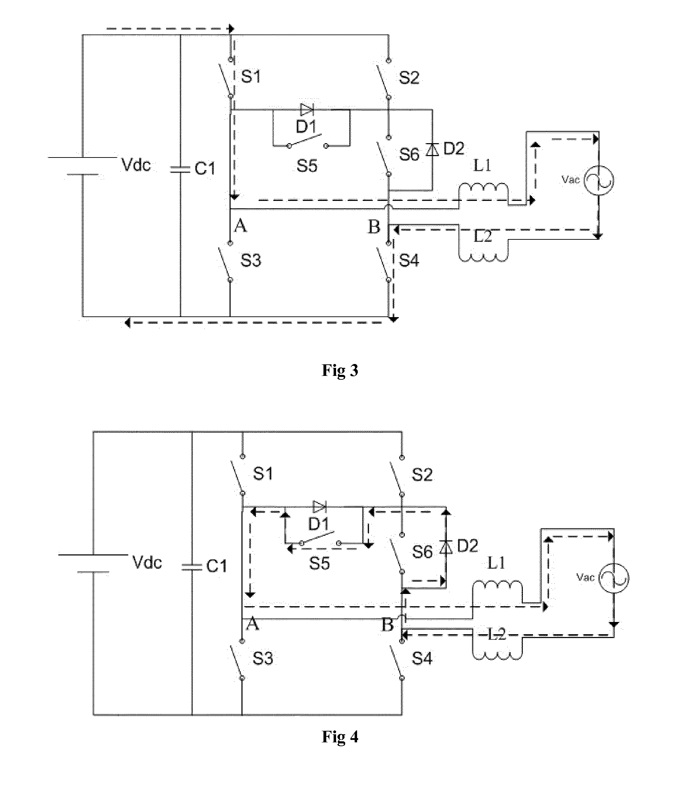

In the period that the filter inductors L1 and L2 output the positive half cycle of the AC power supply Vac at the outer sides thereof, the switch tube S5 is open throughout the positive half cycle; when the high-frequency trigger signal of the switch tubes S1 and S4 is at high level, the switch tubes S1 and S4 are turned on, the positive terminal of the DC power supply Vdc, the switch tube S1, the filter inductor L1, the output AC power supply Vac, the filter inductor L2, the switch tube S4 and the negative terminal of the DC power supply Vdc in turn constitute a current loop, as shown in FIG. 3; when the high-frequency trigger signal of the switches S1 and S4 is at low level, the switch tube S5, the diode D2, the filter inductor L2, the output AC power supply Vac and the filter inductor L1 constitute a freewheeling loop, as shown in FIG. 4.

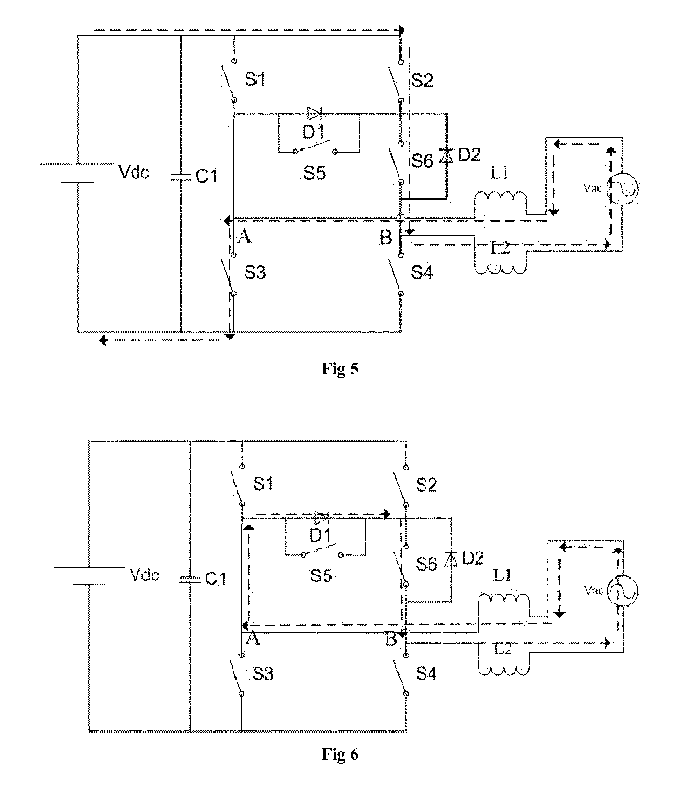

In the period that he filter inductors L1 and L2 output the negative half cycle of the AC power supply Vac at the outer sides thereof, the switch tube S6 is open throughout the negative half cycle; when the high-frequency trigger signal of the switch tubes S2 and S3 is at high level, the switch tubes S2 and S3 are turned on, the positive electrode of the DC power supply Vdc, and the switch S2, the switch tube S6, the filter inductor L2, the output AC power supply Vac, the filter inductor L1, the switch S3 and the negative electrode of the DC power supply Vdc in turn constitute a current loop, as shown in FIG. 5; when the high-frequency trigger signal of the switch tubes S2 and S3 is at low level, the switch tube S6, the diode D1, the filter inductor L1, the output AC power source Vac and the filter inductor L2 constitute a freewheeling loop, as shown in FIG. 6.

Simply speaking, the role of the inverter is an electronic device to convert a low voltage (12V or 24V or 48V) DC power into a 220V AC power. Because we usually rectify the 220V AC power into a DC power to use, while the role of the inverter is exactly contrary to this. We are in a "mobile" era, mobile office, mobile communications, mobile leisure and entertainment, in the mobile state, people not only need a low-voltage DC power supplied by battery or storage battery, at the same time need more of the 220V alternating current power which is indispensable in our daily environment, and the inverter can meet this demand.

An inverter at work itself also consumes part of the electricity, therefore, its input power is greater than its output power. The inverter's efficiency is the ratio of the output power to the input power of the inverter, i.e. the efficiency of the inverter is the output power to input power ratio. For example, an inverter is input with a 100W DC power, and outputs a 90W AC power, then, its efficiency is 90%. Therefore, the high efficiency inverters are very important for the development of modern society, the high efficiency inverters can improve the energy conversion rate of the DC power, reduce energy consumption, not only reduce the cost of production and use, and further have the social significance of energy saving, energy conservation and emission reduction, environmental protection and improving energy utilization rate, particularly for present serious situation of shortage of energy, its significance is more prominent.

The specific embodiment described herein is merely for illustration of the spirit of the present invention. Persons skilled in the technical field of the present invention can do a variety of modification or supplement to the described specific embodiment or adopt similar manners to replace the described specific embodiment, but this does not depart from the spirit of the present invention or surpass the scope defined by the appended claims.

## Claims

1. A high efficiency inverter, comprising a DC power supply Vdc and an AC power supply Vac, **characterized in that**: the high efficiency inverter further comprise: six switch tubes S1, S2, S3, S4, S5, S6, two diodes D1, D2, two filter inductors L1, L2, and a microcontroller MCU, positive and negative terminals of the DC power supply Vdc are connected with a filter capacitor C1, current input terminals of the switch tube S1 and the switch tube S2 are connected with the positive terminal of the current DC power supply Vdc, an current output terminal of the switch tube S1 is simultaneously connected with an input terminal of the switch tubes S3, an input terminal of the switch tube S5, an anode of the diode D1 and the filter inductor L1, a current output terminal of the switch tube S2 is simultaneously connected with an output terminal of the switch tube S5, a cathode of the diode D1, an input terminal of the switch S6 and a cathode of the diode D2, current output terminals of the switch tube S3 and the switch tube S4 are connected with a negative electrode of the DC power supply Vdc, an output terminal of the switch tube S6 and an input terminal of the switch tube S4, an anode of the diode D2 are connected with the filter inductor L2, another ends of the filter inductors L1 and L2 are connected by the alternating power supply Vac, respective control terminals of switch tubes S1, S2, S3, S4 are connected with high-frequency pulse signal output terminals of the microcontroller through modulation circuits, the switch tubes S5 and S6 are respectively connected with working frequency pulse signal output terminals of the microcontroller MCU.

2. The high efficiency inverter in accordance with claim 1, **characterized in that**, the control terminals of the switch tubes S1 and S4 are respectively connected with a first one of the high-frequency pulse signal output terminals of a microcontroller MCU through the corresponding modulation circuit, the control terminals of the switch tubes S2 and S3 are respectively connected with a second one of the high-frequency pulse signal output terminal of the microcontroller MCU through the corresponding modulation circuit, the switching tubes S5 and S6 are respectively connected with two of the working frequency pulse signal output terminals of the microcontroller MCU.

3. The high efficiency inverter in accordance with claim 1, **characterized in that**, in the period that the filter inductors L1 and L2 output a positive half cycle of the AC power supply Vac at the outer sides thereof, the switch tube S5 is open throughout the positive half cycle; when the high-frequency trigger signal of the switch tubes S1 and S4 is at high level, the switch tubes S 1 and S4 are turned on, the positive terminal of the DC power supply Vdc, the switch tube S1, the filter inductor L1, the output AC power supply Vac, the filter inductor L2, the switch tube S4 and the negative terminal of the DC power supply Vdc in turn constitute a current loop; when the high-frequency trigger signal of the switches S1 and S4 is at low level, the switch tube S5, the diode D2, the filter inductor L2, the output AC power supply Vac and the filter inductor L1 constitute a freewheeling loop.

4. The high efficiency inverter in accordance with claim 1, **characterized in that**, in the period that the filter inductors L1 and L2 output a negative half cycle of the AC power supply Vac at the outer sides thereof, the switch tube S6 is open throughout the negative half cycle; when the high-frequency trigger signal of the switch tubes S2 and S3 is at high level, the switch tubes S2 and S3 are turned on, the positive electrode of the DC power supply Vdc, and the switch S2, the switch tube S6, the filter inductor L2, the output AC power supply Vac, the filter inductor L1, the switch S3 and the negative electrode of the DC power supply Vdc in turn constitute a current loop; when the high-frequency trigger signal of the switch tubes S2 and S3 is at low level, the switch tube S6, the diode D1, the filter inductor L1, the output AC power source Vac and the filter inductor L2 constitute a freewheeling loop.
